# EUROPEAN PATENT APPLICATION

(11) **EP 2 093 004 A2**
(43) Date of publication of application: **26.08.2009**
(21) Application number: 09002288.0
(22) Date of filing: 18.02.2009
(51) Int. Cl.: B23D 23/00

(54) **Corrugated fin cutting method and corrugated fin cutting apparatus**

(30) Priority: 20.02.2008 JP 2008038643; 19.04.2008 JP 2008109667
(71) Applicant: Calsonic Kansei Corporation, Saitama-shi Saitama 331-8501 (JP)
(72) Inventor: Chikuma, Hiroshi, Saitama-shi Saitama, 331-8501 (JP); Onuki, Hisashi, Saitama-shi Saitama, 331-8501 (JP)
(74) Representative: Schaeberle, Steffen

(57) **Abstract**

A corrugated fin cutting method includes continuously conveying a fin material (1) formed into a corrugated shape having a plurality of ridge sections (11) and a plurality of valley sections (12) while regulating a number of the ridge sections (11) and positioning the valley sections (12); and cutting the fin material (1) at a bottom portion of one of the valley sections (12) between a stationary blade member (4) and a rotating blade member (6, 60) as the rotating blade member (6, 60) rotates in one direction with respect to the stationary blade member (4) while the fin material (1) is being conveyed.

## Description

### CROSS-REFERENCE TO RELATED APPLICATIONS

This application claims priority to Japanese Patent Application No. 2008-038643, filed on February 20, 2008, and 2008-109667, filed on April 19, 2008. The entire disclosures of Japanese Patent Application Nos. 2008-038643 and 2008-109667 are hereby incorporated herein by reference.

### BACKGROUND OF THE INVENTION

### Field of the Invention

The present invention relates to a corrugated fin cutting method and a corrugated fin cutting apparatus.

### Background Information

Japanese Laid-Open Patent Publication No. 11-151611 discloses a conventional corrugated fin cutting apparatus for cutting a corrugated fin conveyed continuously at a prescribed movement speed to a prescribed length. This corrugated fin cutting apparatus includes a drive motor, a cam that is rotationally driven by the drive motor, a moving head configured to move reciprocally along a direction parallel to a movement direction of the corrugated fin in response to rotation of the cam, a cutter holder supported in the moving head such that it can rotate freely about a rotational axis that is parallel to a rotational axis of the cam, a cutter attached to an outer peripheral portion of the cutter holder, a synchronizing mechanism configured to make the cam and the cutter holder rotate in a synchronized manner, and a control device configured to control a rotational speed of the drive motor based on a movement speed of the corrugated fin and control the movement speed of the moving head so as to synchronize the movement of the cutter with the movement of the corrugated fin.

In view of the above, it will be apparent to those skilled in the art from this disclosure that there exists a need for improved corrugated fin cutting apparatus and method. This invention addresses this need in the art as well as other needs, which will become apparent to those skilled in the art from this disclosure.

### SUMMARY OF THE INVENTION

In the conventional corrugated fin cutting apparatus described above, when high speed cutting is attempted, the moving head and the cutter holder move reciprocally at a high speed along the conveying direction of the corrugated fin in synchronization with the movement of the corrugated fin. Consequently, when the apparatus is designed to accommodate high speed cutting, inertia becomes an issue and the apparatus becomes more expensive due to such factors as increased complexity of the structure and control and the selection of structural materials that are both light in weight and high in rigidity. Additionally, the durability is poor and the frequency of regular parts replacements and other procedures increases.

Accordingly, one object of the present invention is to provide a corrugated fin cutting apparatus or method that can cut the corrugated fin material at a high speed, is highly durable, and can reduce costs due to a lighter, simplified structure and a simplified control.

In order to achieve the aforementioned object, a corrugated fin cutting method includes continuously conveying a fin material formed into a corrugated shape having a plurality of ridge sections and a plurality of valley sections while regulating a number of the ridge sections and positioning the valley sections, and cutting the fin material at a bottom portion of one of the valley sections between a stationary blade member and a rotating blade member as the rotating blade member rotates in one direction with respect to the stationary blade member while the fin material is being conveyed.

Moreover, a corrugated fin cutting apparatus includes a conveying device and a cutting device. The conveying device is configured and arranged to continuously convey a fin material formed into a corrugated shape having a plurality of ridge sections and a plurality of valley sections while regulating a number of the ridge sections and positioning the valley sections of the fin material. The cutting device has a stationary blade member and a rotating blade member. The rotating blade member is configured and arranged to rotate in one direction with respect to the stationary blade member to cut a bottom portion of one of the valley sections of the fin material between the stationary blade member and the rotating blade member while the fin material is being conveyed by the conveying device.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Referring now to the attached drawings which form a part of this original disclosure:

Figure 1 is a front elevational view of a corrugated fin cutting apparatus according to a first embodiment;

Figure 2 is a side elevational view of the corrugated fin cutting apparatus according to the first embodiment;

Figure 3 is an enlarged side elevational view of a pair of rotating blade positioning guides of the corrugated fin cutting apparatus according to the first embodiment;

Figure 4 is an enlarged front view of a rotating blade member of the corrugated fin cutting apparatus according to the first embodiment;

Figure 5 is an enlarged front view of a blade portion of the rotating blade member and the fin material according to the first embodiment;

Figure 6 is an enlarged side view of the blade portion of the rotating blade member according to the first embodiment as viewed from a direction of an arrow B in Figure 5;

Figure 7 is a front elevational view of showing a state in which the corrugated fin is cut between the rotating blade member and a stationary blade member in accordance with the first embodiment;

Figure 8 is a side elevational view showing a state in which the corrugated fin is cut between the rotating blade member and the stationary blade member in accordance with the first embodiment;

Figure 9 is a series of enlarged side elevation views (a) to (d) illustrating a corrugated fin being cut between the rotating blade member and the stationary blade member in accordance with the first embodiment;

Figure 10 is a front elevational view of a corrugated fin cutting apparatus according to a second embodiment;

Figure 11 is a side elevational view of the corrugated fin cutting apparatus according to the second embodiment;

Figure 12 is an enlarged front elevational view of a rotating blade member of the corrugated fin cutting apparatus according to the second embodiment;

Figure 13 is an enlarged side elevational view of a blade portion of the rotating blade member according to the second embodiment;

Figure 14 is an enlarged side view showing a state in which the corrugated fin is cut between the rotating blade member and a stationary blade member in accordance with the second embodiment;

Figure 15 is a pair of enlarged front elevational views (a) and (b) illustrating a corrugated fin being cut between the rotating blade member and a stationary blade member in accordance with the second embodiment;

Figure 16 is a pair of enlarged side elevational views (a) and (b) illustrating a corrugated fin being cut between the rotating blade member and a stationary blade member in accordance with the second embodiment;

Figure 17 is a front elevational view of a rotary arm of a corrugated fin cutting apparatus according to a first modified example of the first embodiment; and

Figure 18 is a front elevational view of a rotary arm of a corrugated fin cutting apparatus according to a second modified example of the first embodiment.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

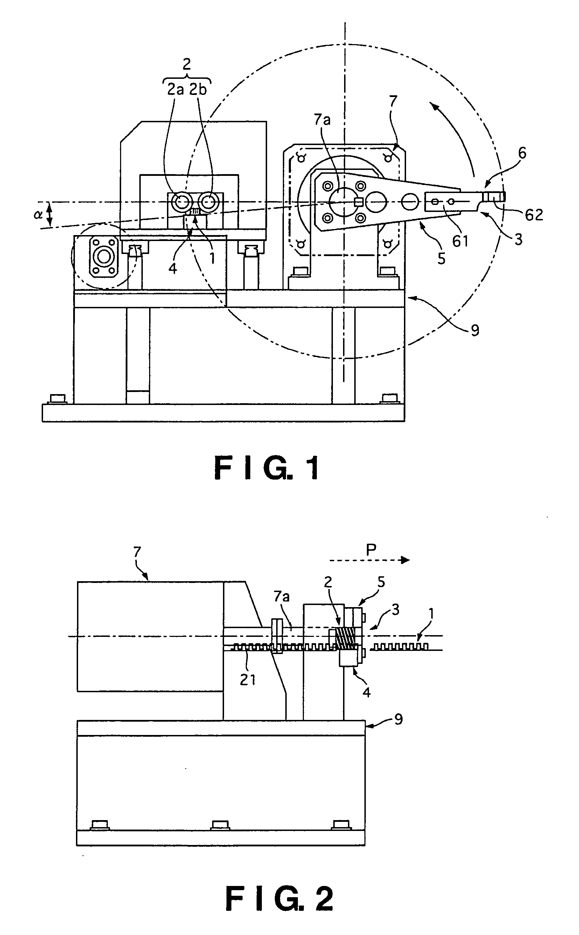

Referring initially to Figures 1 to 9, a corrugated fin cutting apparatus is illustrated in accordance with a first embodiment of the present invention.

As shown in Figures 1, 2, and 9, in the corrugated fin cutting apparatus according to the first embodiment, a fin material 1 that has been processed into a corrugated (wave-like) shape is conveyed in a continuous manner by a conveying device 2 while regulating a number of ridge sections 11 and a position of a valley section 12 of the fin material 1, and a bottom portion of the valley section 12 of the fin material 1 is cut during conveying with a cutting device 3.

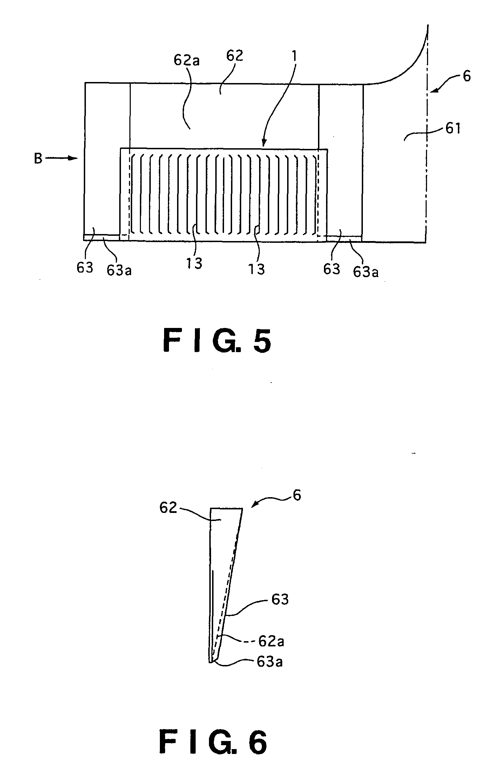

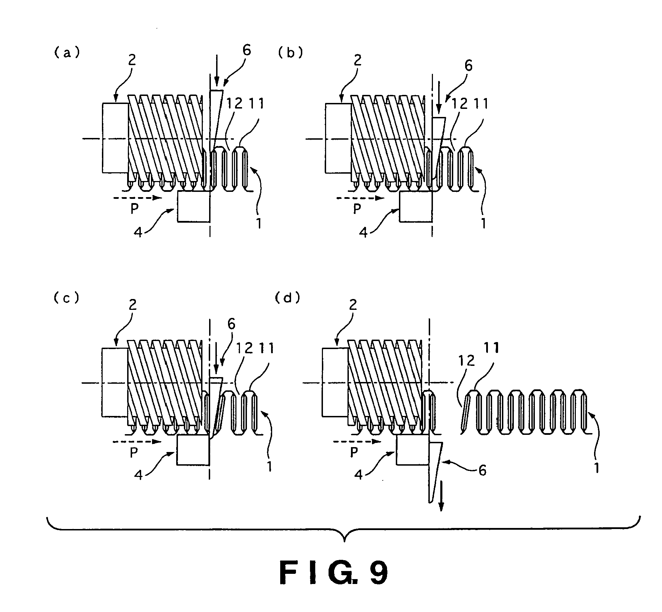

More specifically, the fin material 1 is manufactured by feeding a thin sheet-shaped fin material from a roll (not shown in figures) and passing it between a pair of gearwheel-shaped forming rollers so as to obtain the corrugated fin material 1. As shown in Figure 9, the fin material 1 has a continuous series of the ridge sections 11 and the valley sections 12. Moreover, as shown in Figure 5, a plurality of louvers 13 is also formed in the fin material 1 in a conventional manner.

The conveying device 2 is configured and arranged to convey the corrugated fin material 1 in a conveying direction (indicated with an arrow P in Figures 2 and 9) along a fin guide unit 21 and to regulate a position of the ridge sections 11 and the valley sections 12 of the fin material 1.

As shown in Figures 1, 2 and 9, the conveying device 2 includes a right-handed cylindrical worm member 2a and a left-handed cylindrical worm member 2b configured and arranged to rotate while engaging with the ridge sections 11 at both shoulder portions of the corrugated fin material 1.

The two worm members 2a and 2b are coupled together with a gear member (not shown) such that they can be rotated by a servomotor. The number of valley sections 12 of the corrugated fin material 1 that have been conveyed can be calculated based on the number of rotations of the worm members 2a and 2b. Thus, the worm members 2a and 2b also serve to position the valley sections 12 of the fin material 1 for cutting.

As shown in Figures 1 to 3, 7, and 8, the cutting device 3 includes a stationary blade member 4, a rotary arm 5, a rotating blade member 6, a rotational drive motor 7, and a rotating blade positioning guide unit 8.

The stationary blade member 4 is fixed to the fin guide unit 21 at a position near a downstream side of the conveying device 2 (i.e., a side located downstream with respect to a direction in which the fin material 1 is conveyed).

As shown in Figure 1, a proximal portion of the rotary arm 5 is coupled to a rotary shaft 7a of the rotational drive motor 7, which is fixed to a base 9. As a result, the rotary arm 5 is configured and arranged to be rotated at a high speed by the rotational drive motor 7.

In the first embodiment, the fin material 1 is cut at a prescribed position by rotating the rotary arm 5 once from the waiting position shown in Figure 1 (a position 180 ° away from the position of the fin material 1) at a high speed in synchronization with the conveyance speed of the fin material 1.

As shown in Figure 1, the rotating blade member 6 is detachably attached to a distal end portion of the rotary arm 5. The rotating blade member 6 is configured and arranged to cut the fin material 1 in conjunction with the stationary blade member 4.

As shown in Figures 5, 6, and 9, the rotating blade member 6 has a mounting base portion 61 and a blade portion 62. A proximal end portion of the mounting base portion 61 is detachably attached to a distal end portion of the rotary arm 5. The blade portion 62 is provided on a distal end portion of the mounting base portion 61 so that an edge portion of the blade portion 62 faces in the rotational direction of the rotary arm 5. As shown in Figure 6, the blade portion 62 has a slanted surface 62a on a side thereof that is located downstream with respect to the direction in which the fin material 1 is conveyed.

Moreover, as shown in Figures 5 and 6, a pair of protruding sections 63 is formed on both sides of the slanted surface 62a of the blade portion 62 in such positions that they contact both widthwise side portions of the fin material 1 where the louvers 13 are not formed. Thus, the protruding sections 63 are configured and arranged to prevent the blade portion 62 from contacting the louver 13 when the fin material 1 is cut between the rotating blade member 6 and the stationary blade member 4.

As shown in Figures 5 and 6, a guide tapered portion 63a is formed on a bottom edge portion of each of the protruding sections 63. The guide tapered portion 63a is configured and arranged to enable the protruding sections 63 to slide into the valley section 12 of the fin material 1.

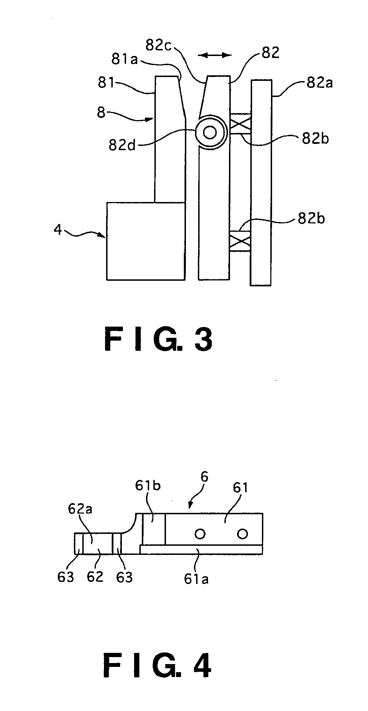

As shown in Figures 3, 7, and 8, the rotating blade positioning guide unit 8 is arranged adjacent to the stationary blade member 4. The rotating blade positioning guide unit 8 is configured and arranged to contact both sides of the mounting base portion 61 of the rotating blade member 6 when the fin material 1 is being cut. The rotating blade positioning guide unit 8 is configured and arranged to ensure (stabilize) a movement path of the rotating blade member 6 with respect to the stationary blade member 4.

The rotating blade positioning guide unit 8 includes an upstream guide piece 81 arranged on a side located upstream with respect to the conveying direction of the fin material 1 and a downstream guide piece 82 arranged on a side located downstream with respect to the conveying direction.

The upstream guide piece 81 is formed as an integral part of the stationary blade member 4 such that a bottom end portion of the upstream guide piece 81 is joined to the stationary blade member 4.

As shown in Figure 3, the downstream guide piece 82 is coupled to compression springs 82b (biasing device) arranged between the downstream guide piece 82 and a base platform 82a. The compression springs 82b pushes the downstream guide piece 82 toward the upstream guide piece 81.

As shown in Figure 3, tapered surfaces 81a and 82c are formed on opposing faces of upper end portions of the guide piece 81 and the guide piece 82, respectively. The tapered surfaces 81a and 82c are configured and arranged to guide the mounting base portion 61 of the rotating blade member 6 between the two guide pieces 81 and 82.

The mounting base portion 61 makes sliding contact at sliding contact surfaces 61b (shown in Figure 4) with the opposing surfaces of the two guide pieces 81 and 82. A bottom end edge portion 61a (shown in Figure 4) of the mounting base portion 61 is formed to have a tapered shape.

A hard film coating made of a nitride, a carbide, a carbonitride, or other hard substance is applied onto the sliding contact surfaces 61 b (which contact and slide against the guide pieces 81 and 82) of the mounting base portion 61 at a thickness of about 2 to 3 µm.

As shown in Figure 3, a roller 82d configured to rotatably contact the mounting base portion 61 of the rotating blade member 6 is provided below the tapered portion 82c of the downstream guide piece 82.

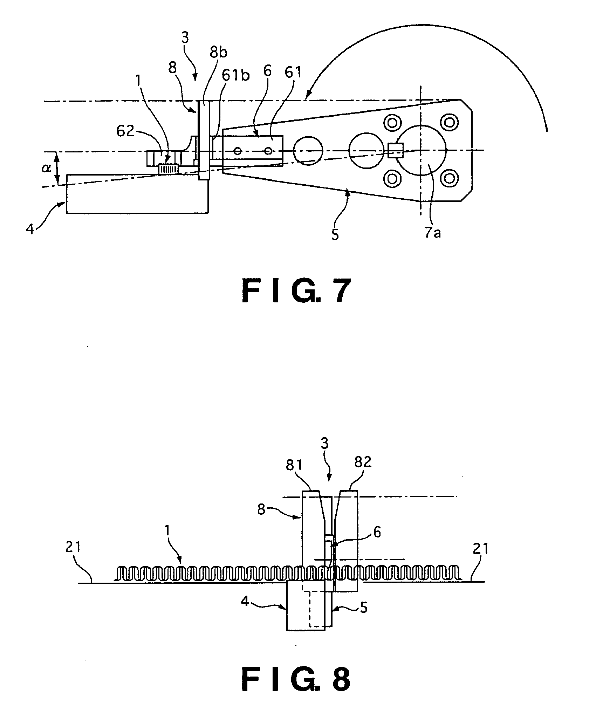

As shown in Figure 7, the positional relationship between the fin material 1 and the blade portion 62 of the rotating blade member 6 is set such that the cutting edge of the blade portion 62 is oriented at a prescribed slant angle (shear angle) α with respect to the bottom portion of the valley section 12 while the rotating blade member 6 cuts the fin material 1.

The operation and effects of the first embodiment will now be explained.

In the corrugated cutting apparatus according to the first embodiment, the rotary arm 5 is rotated once from the waiting position shown in Figure 1 (a position 180 ° away from the position of the fin material 1) at a high speed in synchronization with the conveyance speed of the fin material 1.

As shown in Figures 7 and 8, immediately before the rotating blade member 6 reaches the fin material 1, the mounting base portion 61 of the rotating blade member 6 enters the gap between the guide pieces 81 and 82, and the mounting base portion 61 is guided by the opposing surfaces of the guide pieces 81 and 82 until it reaches the stationary blade member 4. As a result, the movement path of the rotating blade member 6 with respect to the stationary blade member 4 is stabilized as the blade portion 62 cuts the bottom portion of the valley section 12 of the fin material 1.

In the corrugated fin cutting apparatus according to the first embodiment, as described previously, the cutting device 3 is configured to cut the bottom portion of the valley section 12 of the fin material 1 between the stationary blade member 4 and the rotating blade member 6 configured to rotate in one direction with respect to the stationary blade member 4 while the corrugated fin material 1 is being conveyed as shown in the diagrams (a) to (d) of Figure 9. Since the rotating blade member 6 only rotates in one direction, the cutting device 3 does not experience the inertia forces that act on a conventional cutting device in which the entirety of the cutting device moves reciprocally along the conveying direction of the fin material 1.

Therefore, with the corrugated fin cutting apparatus of the first embodiment, high speed cutting can be accomplished, the durability of the apparatus is increased, and the cost of the apparatus can be reduced due to a lighter, simplified structure and a simplified control.

Since the rotating blade positioning guide unit 8 provides sliding contact against both sides of the rotating blade member 6 in a vicinity of the stationary blade member 4 at least during cutting of the fin material 1, the fin material 1 is cut while a movement path of the rotating blade member 6 with respect to the stationary blade member 4 is stabilized. As a result, high speed cutting can be accomplished and the accuracy of the cutting position can be increased.

The upstream guide piece 81 of the rotating blade positioning guide unit 8 is formed as an integral part of the stationary blade member 4 such that a bottom end portion of the upstream guide piece 81 is joined to the stationary blade member 4. The downstream guide piece 82 of the rotating blade positioning guide unit 8 is coupled to the compression springs 82b (biasing device) arranged between the downstream guide piece 82 and a base platform 82a. The compression springs 82b push the downstream guide piece 82 toward the upstream guide piece 81. As a result, it is not necessary to adjust a clearance between the stationary blade member 4 and the rotating blade member 6, and thus, defective cutting of the fin material 1 can be prevented.

The tapered surfaces 81a and 82c are formed on the opposing faces of the upper end portions of the guide piece 81 and the guide piece 82, respectively, and serve to guide the mounting base portion 61 of the rotating blade member 6 between the two guide pieces 81 and 82. The mounting base portion 61 makes sliding contact with the opposing surfaces of the two guide pieces 81 and 82. The bottom end edge portion 61a of the mounting base portion 61 is formed to have a tapered shape. As a result, the mounting base portion 61 of the rotating blade member 6 enters smoothly into the gap between the two guide pieces 81 and 82.

Since a hard film coating is applied to the sliding contact surfaces 61b of the mounting base portion 61 (which contact and slide against the two guide pieces 81 and 82), the guide pieces 81 and 82 and the mounting base portion 61 can be prevented from sticking due to frictional heat generation.

The roller 82d is provided below the tapered portion 82c of the downstream guide piece 82 to rotatably contact the mounting base portion 61 of the rotating blade member 6. As a result, the sliding resistance between the guide piece 82 and the mounting base portion 61 is reduced and the mounting base portion 61 can pass through the gap between the two guide pieces 81 and 82 smoothly.

The protruding sections 63 are formed on both widthwise sides of the slanted surface 62a of the blade portion 62 in such positions that they contact both widthwise side portions of the fin material 1 where the louvers 13 are not formed. Therefore, the protruding sections 63 is arranged to prevent the blade portion 62 from contacting the louvers 13. As a result, accidental damage to the louvers 13 can be prevented.

As shown in Figure 7, the positional relationship between the fin material 1 and the blade portion 62 is set such that the cutting edge of the blade portion 62 is oriented at a prescribed slant angle (shear angle) α with respect to the bottom portion of the valley section 12 while the fin material 1 is cut. As a result, the fin material 1 can be cut cleanly with a smooth edge.

Since the rotating blade member 6 is detachably attached to the rotary arm 5 such that it can be replaced, the running cost of the apparatus can be reduced.

### SECOND EMBODIMENT

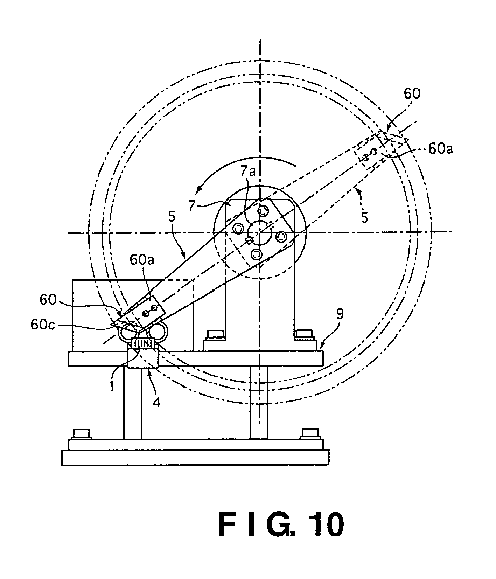

Referring now to Figures 10 to 16, a corrugated fin cutting apparatus in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions and/or illustrations of the parts of the second embodiment that are identical to the parts of the first embodiment may be omitted for the sake of brevity.

Differences between the corrugated fin cutting apparatus according to the second embodiment and the corrugated fin cutting apparatus according to the first embodiment will now be explained.

As shown in Figures 10 to 13, the cutting device 3 includes a stationary blade member 4, a rotary arm 5, a rotating blade member 60, a rotational drive motor 7, and a fin positioning guide portion 10.

As shown in Figure 10, the rotating blade member 60 is detachably attached to a distal end portion of the rotary arm 5. The rotating blade member 60 is configured and arranged to cut the fin material 1 in conjunction with the stationary blade member 4 when the fin material 1 is being conveyed by the conveying device 2.

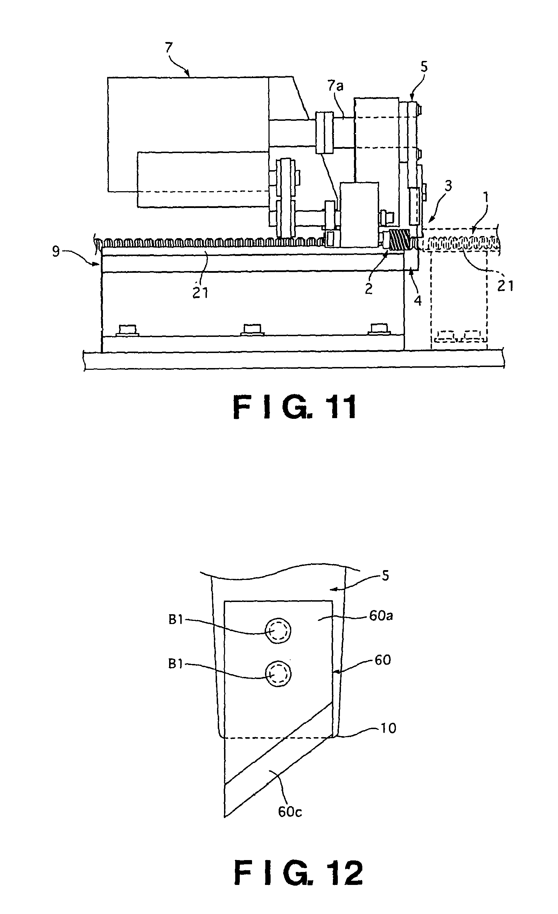

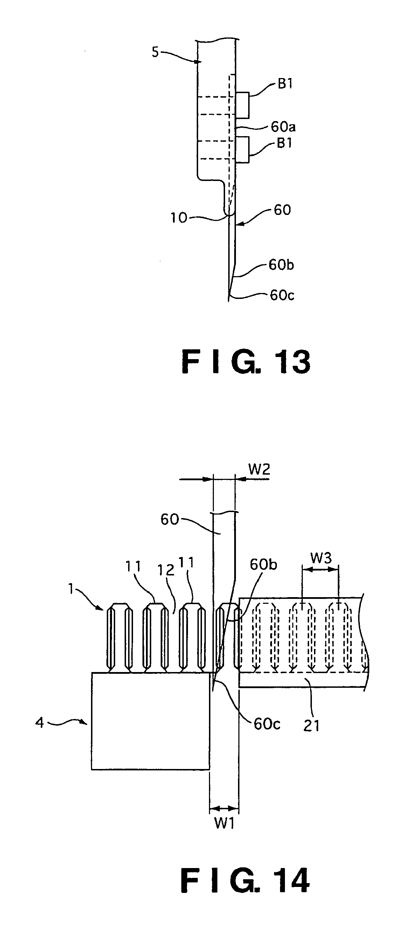

As shown in Figures 12 and 13, the rotating blade member 60 has a mounting base portion 60a and a blade portion 60c. A proximal end portion of the mounting base portion 60a is detachably attached to a distal end portion of the rotary arm 5 with two bolts B 1 such that the rotating blade member 60 can be detached and replaced. The blade portion 60c is provided on a distal end portion of the mounting base portion 60a so that an edge portion (blade) of the blade portion 60c faces in the rotational direction of the rotary arm 5. As shown in Figure 13, the blade portion 60c has a slanted surface 60b on a side thereof that is located downstream with respect to the direction in which the fin material 1 is conveyed.

As shown in Figure 10, the rotary shaft 7a of the rotational drive motor 7 is arranged in a position higher than the position of the stationary blade member 4 such that the rotating blade member 60 is placed in a rotational position downward of the rotary shaft 7a of the rotational drive motor 7 (i.e., the side of the rotary arm 5 attached to the rotating blade member 60 slants downward below the rotary shaft 7a of the rotational drive motor 7) when the rotating blade member 60 cuts the bottom portion of the valley section 12 of the fin material 1. It is preferable to arrange the rotary shaft 7a such that the rotary arm 5 is at a slant angle of 30° to 45° when the rotating blade member 60 cuts the fin material 1 as shown in Figure 10.

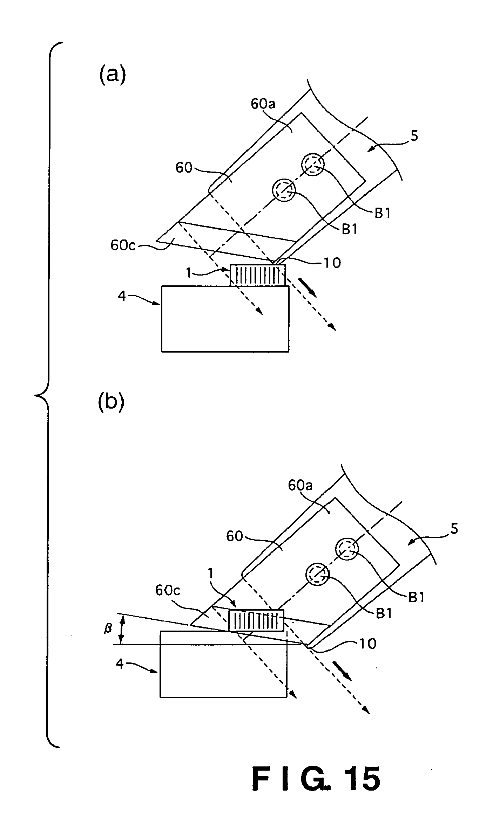

As shown in the diagram (b) of Figure 15, the positional relationship between the fin material 1 and the blade portion 60c of the rotating blade member 60 is set such that the cutting edge of the blade portion 60c is oriented at a prescribed slant angle (shear angle) β with respect to the bottom portion of the valley section 12 of the fin material 1 when the rotating blade member 60 cuts the fin material 1. As shown in the diagram (b) of Figure 15, the slant angle β is formed between the cutting edge of the blade portion 60c with respect to the surface of the bottom portion of the valley section 12. The slant angle β is preferably from 2° to 15°.

Also, as shown in the diagrams (a) and (b) of Figure 15, the fin positioning guide portion 10 is configured and arranged to enter an end portion of the valley section 12 before the blade portion 60c enters the valley section 12 to guide the blade portion 60c into the valley section 12.

Thus, as shown in Figures 12 and 13, the fin positioning guide portion 10 is provided such that an edge portion thereof that is located at the distal end of the rotary arm 5 and faces in the rotational direction protrudes slightly more than a proximal side of the cutting edge of the blade portion 60c.

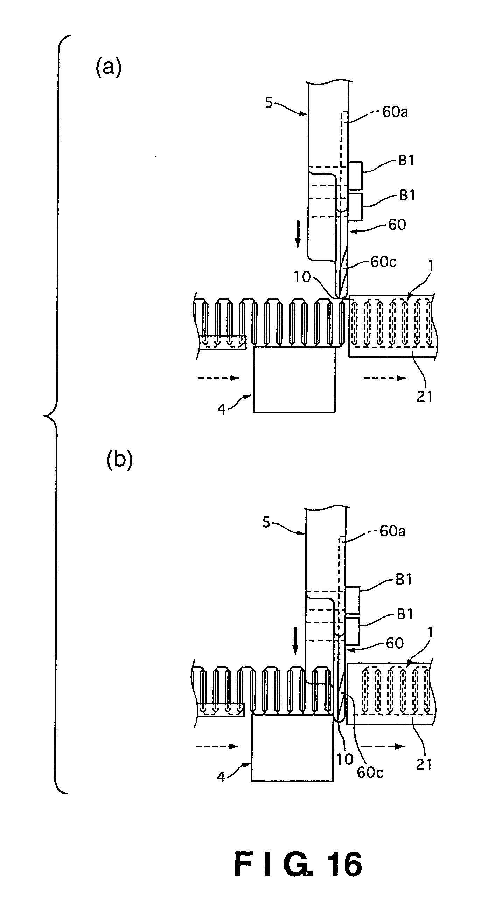

As shown in Figure 12, the fin positioning guide portion 10 is beveled so as to have a radius on a side thereof from which it enters the valley section 12 of the fin material 1. As shown in Figure 13, a thickness of the fin positioning guide portion 10 is larger than a thickness of the rotating blade member 60 such that the fin positioning guide portion 10 protrudes in a direction oriented upstream with respect to the conveying direction of the fin material 1. In this way, as shown in the diagrams (a) and (b) of Figure 16, the rotating blade member 60 is prevented from damaging a louver 13 of the fin material 1.

As shown in Figure 14, a gap W1 between the stationary blade member 4 and the fin guide unit 21 that guides transferring of the fin material 1 after the fin material 1 has been cut is set to be wider than a blade thickness W2 of the rotating blade member 60 and narrower than a ridge pitch W3 of the fin material 1.

The operation and effects of the second embodiment will now be explained.

In the corrugated cutting apparatus according to the second embodiment, the rotary arm 5 is rotated once from the waiting position indicated with a broken line in Figure 10 (a position 180° away from the position of the fin material 1) at a high speed in synchronization with the conveyance speed of the fin material 1.

As shown in Figures 15 and 16, the fin positioning guide portion 10 enters an end portion of the valley section 12 of the fin material 1 immediately before the blade portion 60c of the rotating blade member 60 enters the valley section 12. As a result, the rotating blade member 60 enters the valley section 12 of the fin material 1 in a reliable manner and, afterwards, the fin positioning guide portion 10 passes through the end portion of the valley section 12 while the blade portion 60c of the rotating blade member 60 cuts the bottom portion of the valley section 12.

In the corrugated fin cutting apparatus according to the second embodiment, as described previously, the cutting device 3 is configured to cut the bottom portion of the valley section 12 of the fin material 1 between the stationary blade member 4 and the rotating blade member 60 configured to rotate in one direction with respect to the stationary blade member 4 while the fin material 1 is being conveyed. Since the rotating blade member 60 only rotates in one direction, the cutting device 3 does not experience the inertia forces that act on a conventional cutting device, in which the entirety of the cutting device moves reciprocally along the conveying direction of the fin material 1.

Therefore, high speed cutting can be accomplished, the durability of the apparatus is increased, and the cost of the apparatus can be reduced due to a lighter, simplified structure and a simplified control with the corrugated fin cutting apparatus according to the second embodiment.

The rotating blade member 60 is configured and arranged to cut the bottom portion of the valley section 12 of the fin material 1 in a rotational position downward of the rotational center (the rotary shaft 7a) with the side of the rotary arm 5 to which the rotating blade member 60 is attached is slanted downward below the rotational center. The fin positioning guide portion 10 is configured and arranged to enter an end portion of the valley section 12 before the blade portion 60c of the rotating blade member 60 enters the valley section 12, thus allowing the rotating blade member 60 to enter the valley section 12 of the fin material 1 in a reliable manner. As a result, high speed cutting can be accomplished while increasing the accuracy of the cutting position.

The fin positioning guide portion 10 is beveled so as to have a radius on a side thereof from which it enters a valley section 12 of the fin material 1. As a result, the rotating blade member 60 can enter the valley section 12 smoothly.

Also, a thickness of the fin positioning guide portion 10 is larger than a thickness of the rotating blade member 60 such that the fin positioning guide portion 10 protrudes in a direction oriented upstream with respect to the direction in which the fin material 1 is conveyed. In this way, the rotating blade member 60 is prevented from accidentally damaging the louver 13 of the fin material 1.

The gap W1 between the stationary blade member 4 and the fin guide unit 21 for guiding the fin material 1 after the fin material 1 has been cut is set to be wider than the blade thickness W2 of the rotating blade member 60 and narrower than the ridge pitch W3 of the fin material 1. As a result, the following effect is obtained.

When the rotating blade member 60 cuts the bottom portion of the valley section 12 of the fin material 1, the thickness of the rotating blade member 60 causes a force to develop which acts to deform the fin material 1 downward. By making the gap W1 narrow, the bottom portion of the valley section 12 located immediately downstream from the valley section 12 whose bottom portion is being cut can be supported by the fin guide unit 21 during the cut and deformation of the fin material 1 can be prevented.

Since the rotating blade member 60 is detachably attached to the rotary arm 5 such that it can be replaced, the running cost of the apparatus can be reduced.

The present invention is not limited to the embodiments explained heretofore. Various design modifications can be made without departing from the scope of the invention.

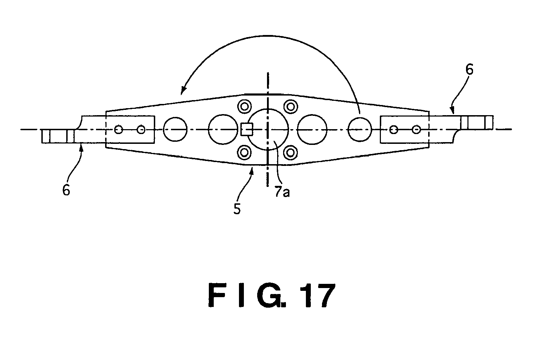

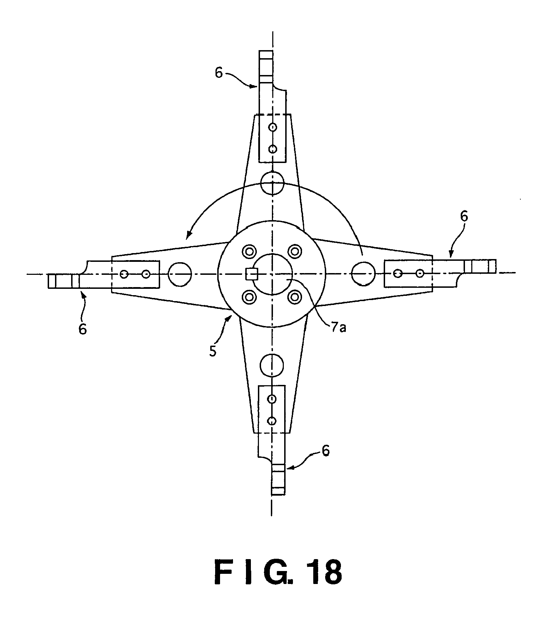

For example, although in the first embodiment only one rotating blade member 6 is provided on the rotary arm 5, it is also acceptable to provide a rotary arm centered on a rotary shaft 7a having a plurality of attachment portions to which a plurality of rotating blade members 6 are attached, respectively. For example, such a rotary arm 5 can be generally a linear shape with two rotating blade members 6 attached to each distal end portion as shown in Figure 17, or a rotary arm 5 can be a generally cross-shaped member with four rotating blade members 6 attached to each distal end portion as shown in Figure 18. The same modification can be applied to the second embodiment.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. A corrugated fin cutting method comprising:
continuously conveying a fin material (1) formed into a corrugated shape having a plurality of ridge sections (11) and a plurality of valley sections (12) while regulating a number of the ridge sections (11) and positioning the valley sections (12); and
cutting the fin material (1) at a bottom portion of one of the valley sections (12) between a stationary blade member (4) and a rotating blade member (6, 60) as the rotating blade member (6, 60) rotates in one direction with respect to the stationary blade member (4) while the fin material (I) is being conveyed.

2. The corrugated fin cutting method recited in claim 1, wherein
the cutting of the fin material (1) includes stabilizing a movement path of the rotating blade member (6) with respect to the stationary blade member (4) by slidably supporting both sides of the rotating blade member (6) in a vicinity of the stationary blade member (4) at least during cutting of the fin material (1).

3. The corrugated fin cutting method recited in claim 1, wherein
the cutting of the fin material (1) includes cutting the bottom portion of the one of the valley sections (12) when the rotating blade member (60) is in a rotational position downward of a rotational center (7a) of the rotating blade member (60), and
the cutting of the fin material (1) also includes placing a positioning guide portion (10) of the rotating blade member (60) provided adjacent to a blade portion (60c) of the rotating blade member (60) in an end portion of the one of the valley sections (12) before the blade portion (60c) of the rotating blade member (60) enters the one of the valley sections (12) to guide the blade portion (60c) into the one of the valley sections (12).

4. A corrugated fin cutting apparatus comprising:
a conveying device (2) configured and arranged to continuously convey in a conveying direction a fin material (1) formed into a corrugated shape having a plurality of ridge sections (11) and a plurality of valley sections (12) while regulating a number of the ridge sections (11) and positioning the valley sections (12); and
a cutting device (3) having a stationary blade member (4) and a rotating blade member (6, 60), the rotating blade member (6, 60) being configured and arranged to rotate in one direction with respect to the stationary blade member (4) to cut a bottom portion of one of the valley sections (12) of the fin material (1) between the stationary blade member (4) and the rotating blade member (6, 60) while the fin material (1) is being conveyed by the conveying device (2).

5. The corrugated fin cutting method recited in claim 4, wherein
the cutting device (3) further includes a rotating blade positioning guide unit (8) disposed adjacent to the stationary blade member (4) with respect to the conveying direction, the rotating blade positioning guide unit (8) being configured and arranged to slidably contact against both sides of the rotating blade member (6) at least during cutting of the fin material (1) to stabilize a movement path of the rotating blade member (6) with respect to the stationary blade member (4).

6. The corrugated fin cutting apparatus recited in claim 5, wherein
the rotating blade positioning guide unit (8) includes
an upstream guide piece (81) disposed on an upstream side with respect to the conveying direction of the fin material (1), the upstream guide piece (81) being fixedly coupled to the stationary blade member (4), and
a downstream guide piece (82) disposed on a downstream side with respect to the conveying direction, the downstream guide piece (82) being coupled to a biasing device (82b) that pushes the downstream guide piece (82) toward the upstream guide piece (81).

7. The corrugated fin cutting apparatus recited in claim 5 or 6, wherein
the rotating blade member (6, 60) includes a protruding section (63) disposed on a downstream side surface of a blade portion (62) of the rotating blade member (6), the protruding section (63) being configured and arranged to abut against a widthwise side portion of the fin material (1) that is free of a louver (13) to prevent the blade portion (62) of the rotating blade member (6) from contacting the louver (13) of the fin material (1).

8. The corrugated fin cutting apparatus recited in any one of claims 5 to 7, wherein
the rotating blade positioning guide unit (8) includes
an upstream guide piece (81) disposed on an upstream side with respect to the conveying direction of the fin material (1), and
a downstream guide piece (82) disposed on a downstream side with respect to the conveying direction, the downstream guide piece (82) including a roller (82d) disposed on a sliding contact surface of the downstream guide piece (82).

9. The corrugated fin cutting apparatus recited in claim 4, wherein
the cutting device (3) is configured and arranged to cut the bottom portion of the one of the valley sections (12) when the rotating blade member (60) is in a rotational position downward of a rotational center (7a) of the rotating blade member (60), and
the rotating blade member (60) includes a fin positioning guide portion (10) disposed adjacent to a blade portion (60c) of the rotating blade member (60), the fin positioning guide portion (10) being configured and arranged to enter an end portion of the one of the valley sections (12) before the blade portion (60c) of the rotating blade member (60) enters the one of the valley sections (12) to guide the blade portion (60c) of the rotating blade member (60) into the one of the valley sections (12).

10. The corrugated fin cutting apparatus recited in claim 9, wherein
the fin positioning guide portion (10) is beveled to have a radius on a side of the rotating blade member (60) from which the fin positioning guide portion (10) enters the end portion of the one of the valley sections (12) of the fin material (1).

11. The corrugated fin cutting apparatus recited in claim 9 or 10, wherein
the rotating blade member (6, 60) is configured and arranged such that a cutting edge of the blade portion (62, 60c) forms a prescribed angle with respect to the bottom portion of the one of the valley sections (12) of the fin material (1) when the bottom portion of the one of the valley sections (12) is cut between the rotating blade member (6, 60) and the stationary blade member (4).

12. The corrugated fin cutting apparatus recited in any one of claims 9 to 11, further comprising
a fin guide unit (21) configured and arranged to guide transferring of the fin material (1) after the fin material (1) has been cut between the rotating blade member (6, 60) and the stationary blade member (4),
the stationary blade member (4) and the fin guide unit (21) being arranged so that a gap (W1) formed between the stationary blade member (4) and the fin guide unit (21) is set to be wider than a blade thickness (W2) of the blade portion (60c) of the rotating blade member (6, 60) and narrower than a ridge pitch (W3) of the ridge sections (11) of the fin material (1).
